# EUROPEAN PATENT APPLICATION

(11) **EP 4 613 583 A1**
(43) Date of publication of application: **10.09.2025**
(21) Application number: 24161963.4
(22) Date of filing: 07.03.2024
(51) Int. Cl.: B60T 17/00

(54) **SILENCER HOUSING COMPONENT, SILENCER, PNEUMATIC SYSTEM FOR A VEHICLE, COMMERCIAL VEHICLE, AND METHOD OF EXHAUSTING GAS FROM A PNEUMATIC SYSTEM FOR A VEHICLE**

(71) Applicant: ZF CV Systems Europe BV, 1170 Brüssel (BE)
(72) Inventor: OLSZEWSKI, Jakub, 50-513 Wroclaw (PL)
(74) Representative: Copi, Joachim

(57) **Abstract**

A silencer housing component (10) for a pneumatic system for a vehicle comprises an outer wall (20) and an end wall (30). The outer wall (20) extends circumferentially around a center axis (13). A plurality (23) of gas outlet passages (24) are formed through the outer wall (20). The end wall (30) comprises a gas directing surface (31) that is curved as it extends from the outer wall (20) towards the center axis (13).

## Description

The invention relates to a silencer configured for installation on a vehicle, such as a commercial vehicle. The invention relates in particular to a silencer housing configured for use in a pneumatic system of a commercial vehicle.

Pneumatic systems are used on vehicles in a wide variety of applications, including air dryer systems, pneumatic suspension, pneumatic levelling, and/or braking systems. Silencers are components of pneumatic systems that help reduce noise levels produced by the flow of compressed gas in these systems. Silencers are operative to attenuate or dampen the noise generated by expansion and release of compressed gas. Generally, the function of a silencer is to at least partially absorb and/or dissipate energy of the gas, converting the energy into heat instead of sound.

Silencers in pneumatic systems of vehicles provide various benefits. The benefits include, without limitation, noise reduction, improved compliance with noise pollution regulations, improved working conditions for vehicle operators and/or passengers, and/or enhanced vehicle performance. For illustration, silencers help create a quieter working environment for vehicle operators, reducing the risk of hearing damage and improving overall working conditions. Silencers can also contribute to optimizing the overall performance of the pneumatic vehicle system by reducing pressure fluctuations. Overall, silencers in pneumatic vehicle systems help improve comfort, reduce noise pollution, and optimize the performance of pneumatic vehicle systems.

DE 10 2009 029968 A1, EP 2 303 659 B1, and DE 10 2008 029489 A1 disclose silencers. There is a continued need in the art for silencers that are configured to provide a further reduction in noise level during a gas exhaust operation.

Thus, there is a need for an enhanced silencer component configured to provide a further reduction in noise level during a gas exhaust operation.

It is an object of the invention to provide an improved silencer housing component that provides an effective reduction in noise level during a gas exhaust operation, an improved silencer that provides an effective reduction in noise level, a pneumatic system and/or a pneumatic system component and/or a vehicle comprising such a silencer housing component.

According to aspects of the invention, a silencer housing component, a silencer, a pneumatic system for a vehicle, a commercial vehicle, and a method of exhausting gas from a pneumatic system are disclosed. The dependent claims define embodiments.

According to an aspect, a silencer housing component for a pneumatic system for a vehicle is provided. The silencer housing component comprises an outer wall extending circumferentially around a center axis of the silencer housing component. The outer wall comprises a first axial end extending along a first plane and a second axial end extending along a second plane, the first plane and the second plane extending transverse to the center axis. A mounting structure for mounting the silencer housing component is arranged at the first axial end of the outer wall. A plurality of gas outlet passages are formed through the outer wall. The silencer housing component further comprises an end wall extending from the outer wall towards the center axis. The end wall comprises a gas directing surface that curves towards the first plane as it extends from the second axial end of the outer wall towards the center axis.

Various effects are attained by the silencer housing component. The gas directing surface is non-planar and curved in such a manner that it is configured to direct gas entering the silencer housing component in a central region around the center axis towards the outer wall in which the gas outlet passages are provided. Thereby, efficient noise reduction is attainable. The gas directing surface that is curved as it extends from the outer wall to the central axis is configured to direct the gas flow, thereby contributing to a more organized gas flow at the second axial end of the silencer housing component that is opposite the gas inlet of the silencer. This provides reduced noise. Vehicle operator and/or passenger comfort is enhanced thereby. Noise pollution is reduced. Regulatory requirements can be complied with while providing a more efficient noise reduction even below the noise levels tolerated by regulatory provisions.

The first axial end of the silencer housing component may define a gas inlet at which a gas flow enters the silencer housing component.

Thereby, the silencer housing component may be configured to provide noise reduction for a gas flow entering the silencer housing component at the first axial end and exiting the silencer housing component through the gas outlet passages provided in the outer wall.

The outer wall and the end wall may define a receptacle for a damping material.

Thereby, the silencer housing component is configured to accommodate a damping material that provides noise reduction as gas passes through the silencer housing component.

The gas directing surface may comprise a gas directing surface center on the center axis. The gas directing surface may extend continuously from the gas directing surface center to an outer perimeter of the gas directing surface proximate the outer wall.

Thereby, the gas directing surface directs the gas flow is directed from regions proximate the center axis to the gas outlet passages in a manner which further reduces noise levels. This contributed to improved reduction in noise pollution and, as a consequence, improved vehicle operator and/or passenger comfort and improved vehicle performance.

The gas directing surface center has an offset from the second plane towards the first plane.

Thereby, the gas directing surface center is located such that it is circumferentially surrounded (around the center axis) by the outer wall. Thus, the gas directing surface is configured to start guiding the gas flow towards the outlet passages in a center region of the silencer housing component, which center region is intermediate (along the center axis) between the first plane along which the first axial end of the silencer housing component extends and the second plane along which the second axial end of the silencer housing component extends. This configuration enables the gas directing surface to efficiently direct the gas flow outwardly, relative to the center axis, towards the gas outlet openings, providing for an efficient guidance of the gas flow towards the gas outlet openings. Thereby, further improvements in noise reduction are attained.

The gas directing surface center may be located further away from the second plane than at least one, at least some, a majority of, or all of the gas outlet passages. Alternatively or additionally, the gas directing surface center may be located closer to the first plane than at least one, at least some, a majority of, or all of the gas outlet passages.

Thereby, the gas directing surface is configured to direct a gas flow outwardly relative to the center axis, starting form an axial position that is intermediate between the first and second axial ends of the silencer housing component. This configuration enables the gas directing surface to efficiently direct the gas flow outwardly, relative to the center axis, towards the gas outlet openings, providing for an efficient guidance of the gas flow towards the gas outlet openings. Thereby, further improvements in noise reduction are attained.

The gas directing surface center may be located further away from the second plane than a first outlet passage end of at least one, at least some, a majority of, or all of the gas outlet passages. The first outlet passage end is the end of the respective gas outlet passage that has maximum spacing from the second plane among the two ends of the respective gas outlet passage.

Thereby, the gas directing surface is configured to direct a gas flow outwardly relative to the center axis, starting form an axial position that is intermediate between the first and second axial ends of the silencer housing component. This configuration enables the gas directing surface to efficiently direct the gas flow outwardly, relative to the center axis, towards the gas outlet openings, providing for an efficient guidance of the gas flow towards the gas outlet openings. Thereby, further improvements in noise reduction are attained.

The offset, measured in a direction parallel to the center axis and perpendicular to the second plane, may be greater than a wall thickness of the outer wall at the second axial end.

Thereby, the gas directing surface is configured to direct a gas flow outwardly relative to the center axis, starting form an axial position that is intermediate between the first and second axial ends of the silencer housing component. Thereby, further improvements in noise reduction are attained.

A spacing between the gas directing surface and the second plane, measured parallel to the center axis, may decrease monotonously as function of a radial distance from the center axis.

Thereby, the gas directing surface is configured in such a manner that it extends continuously and smoothly from a radial center (the gas directing surface center) to an outer perimeter. Thus, the gas directing surface is configured to efficiently direct the gas flow from a central region proximate the central axis to the gas outlet openings, providing an improved noise attenuation.

The spacing may decrease strictly monotonously as function of the radial distance for at least a portion of the gas directing surface.

Thereby, the gas directing surface is configured in such a manner that it extends continuously and smoothly from a radial center (the gas directing surface center) to an outer perimeter, while taking into account the change in gas flow from a more axial direction along the center axis to a more radial direction as the gas flow approaches the gas outlet openings. Thus, the gas directing surface is configured to efficiently direct the gas flow from a central region proximate the central axis to the gas outlet openings, providing an improved noise attenuation.

The spacing as function of the radial distance may have a first derivative that may be a non-monotonous function of the radial distance.

Thereby, the gas directing surface is configured in such a manner that it directs the gas flow in an organized manner, taking into account the change in gas flow direction from a more axial direction along the center axis to a more radial direction as the gas flow approaches the gas outlet openings, while also providing a smooth and continuous shape in proximity to the gas guiding surface center. Such a smooth shape provides ease of manufacture and allows the gas directing surface to be free of sharp edges, facilitating the provision of an organized gas flow towards the gas outlet openings. Thus, the gas directing surface is configured to efficiently direct the gas flow from a central region proximate the central axis to the gas outlet openings, providing an improved noise attenuation.

A modulus of the first derivative may decrease in at least an outer portion of the gas directing surface.

Thereby, the gas directing surface is configured in such a manner that it directs the gas flow in an organized manner, taking into account the change in gas flow direction from a more axial direction along the center axis to a more radial direction as the gas flow approaches the gas outlet openings. The gas directing surface may flatten out as it approaches the outer wall. Thus, the gas directing surface is configured to efficiently direct the gas flow from a central region proximate the central axis to the gas outlet openings, providing an improved noise attenuation.

The plurality of gas outlet passages may comprise at least one (e.g., one, several, or all of the gas outlet passages) gas outlet passage extending from a first outlet passage end to a second outlet passage end, the second outlet passage end being located closer to the second plane than the first outlet passage end. The first outlet passage end may be spaced from the second plane by an outlet passage height that may be less than the offset by which the gas directing surface center is spaced from the second plane.

Thereby, the gas directing surface is configured to direct a gas flow outwardly relative to the center axis, starting form an axial position that is closer to the air inlet at the first axial plane than the gas outlet opening(s). This configuration provides further improvements in noise reduction.

The plurality of gas outlet passages may comprise several gas outlet passages, each of which has a first outlet passage end spaced from the second plane by a spacing that may be less than the offset of the gas directing surface center from the second plane, and each of which extends to the second plane.

Thereby, the gas directing surface may be configured to direct a gas flow outwardly relative to the center axis, starting form an axial position that is closer to the air inlet at the first axial plane than the gas outlet opening(s). This configuration provides further improvements in noise reduction.

Each of the outlet passages may extend to the second plane.

Thereby, the gas directing surface may be configured to efficiently direct the gas flow from a central region proximate the center axis towards the outlet passages. This configuration provides further improvements in noise reduction.

The end wall may have an end wall outer perimeter that forms a delimiting wall of at least one, several, or all of the plurality of gas outlet passages.

Thereby, the end wall and the gas directing surface provided thereon may be configured to efficiently direct the gas flow from a central region proximate the center axis towards the outlet passages. This configuration provides further improvements in noise reduction.

The gas directing surface may extend to the end wall outer perimeter.

Thereby, the gas directing surface may be configured to efficiently direct the gas flow from a central region proximate the center axis towards the outlet passages. This configuration provides further improvements in noise reduction.

The plurality of gas outlet passages may comprise radial slots extending to a gas outlet passage height relative to the second plane that may be less than 15 mm, less than 13 mm, less than 11 mm, or less than 10 mm.

Thereby, the height of the gas outlet passages is limited in such a manner that the gas directing surface can efficiently direct the gas to the gas outlet passages. This configuration provides further improvements in noise reduction.

The plurality of gas outlet passages may extend from the second plane to a gas outlet passage height relative to the second plane, wherein: a ratio of the gas outlet passage height divided by a height of the silencer housing component (e.g., the distance between the first plane and the second plane) is less than 0.3, less than 0.25, or less than 0.22; and/or a ratio of the gas outlet passage height divided by a maximum diameter of the silencer housing component (which maximum diameter is the maximum of all diameters measured perpendicularly to the central axis) is less than 0.3, less than 0.25, or less than 0.2.

Thereby, the height of the gas outlet passages is limited in such a manner that the gas directing surface can efficiently direct the gas to the gas outlet passages. This configuration provides further improvements in noise reduction.

The gas directing surface may be symmetric relative to at least one symmetry plane that may comprise the center axis.

Thereby, the gas directing surface can efficiently direct the gas flow outwardly relative from a central region close to the center axis. This configuration provides further improvements in noise reduction.

Alternatively or additionally, the gas directing surface may be rotationally symmetric relative to the center axis.

Thereby, the gas directing surface can efficiently direct the gas flow outwardly relative from a central region close to the center axis. This configuration provides further improvements in noise reduction. This applies in particular when the gas outlet passages comprise gas outlet passages distributed along the circumference around the center axis.

A silencer for a pneumatic system for a vehicle according to an aspect of the invention comprises the silencer housing component. The silencer may comprise a mating housing component, the mating housing component comprising a mating engagement structure for engagement with the mounting structure. The silencer may comprise a noise damping material configured to be disposed in a receptacle delimited by the outer wall and the end wall of the silencer housing component.

Thereby, a silencer is provided which utilizes the silencer housing component and, thus, attains efficient noise reduction. The silencer is configured such that the gas directing surface that is curved as it extends from the outer wall to the central axis is configured to direct the gas flow, thereby contributing to a more organized gas flow at the second axial end of the silencer housing component that is opposite the gas inlet of the silencer. Noise pollution is reduced.

A pneumatic component for a vehicle according to an aspect of the invention comprises a vehicle component housing, a solenoid valve disposed in the housing, the silencer housing component engaged with a mating engagement structure of the vehicle component housing, and a damping material disposed in a receptacle delimited by the outer wall and the end wall of the silencer housing component.

Thereby, the silencer housing component can be mounted directly on a housing of the pneumatic component that comprises a solenoid valve therein. Thus, a compact construction is attained in combination with efficient noise reduction.

The vehicle component housing comprises a pneumatic consumer port for fluidly connecting the pneumatic component to at least one consumer. The vehicle component housing comprises an exhaust port. The silencer housing component is attached to the vehicle component housing at the exhaust port.

Thereby, the silencer housing component can be directly on a housing of the pneumatic component so as to reduce noise levels during an exhaust operation.

The pneumatic component may comprise a controller and/or other control electronics accommodated in the vehicle component housing and configured to selectively energize the solenoid valve.

Thereby, the silencer housing component can be directly on a housing of a pneumatic component so as to reduce noise levels during an exhaust operation, when the pneumatic component is configured as a component of an electropneumatic system for a vehicle.

A pneumatic system for a vehicle according to an aspect of the invention comprises the silencer housing component and/or the silencer.

Thereby, a pneumatic system for a vehicle is provided which utilizes the silencer housing component and, thus, attains efficient noise reduction. The pneumatic system for a vehicle is configured such that the gas directing surface that is curved as it extends from the outer wall to the central axis is configured to direct the gas flow, thereby contributing to a more organized gas flow at the second axial end of the silencer housing component that is opposite the gas inlet of the silencer. Noise pollution is reduced.

The pneumatic system for a vehicle may comprise any one or any combination of: a supply system for supplying compressed air; a levelling system; a suspension system; a braking system.

A commercial vehicle according to an aspect of the invention comprises the silencer housing component, the silencer, or the pneumatic system for a vehicle disclosed herein.

Thereby, a commercial vehicle is provided which utilizes the silencer housing component and, thus, attains efficient noise reduction. The commercial vehicle is configured such that the gas directing surface that is curved as it extends from the outer wall to the central axis is configured to direct the gas flow, thereby contributing to a more organized gas flow at the second axial end of the silencer housing component that is opposite the gas inlet of the silencer. Noise pollution is reduced.

According to an aspect of the invention, a method of exhausting gas from a pneumatic system for a vehicle comprises exhausting the gas through a silencer of the pneumatic system for a vehicle. The silencer comprises a silencer housing component. The silencer housing component comprises an outer wall extending circumferentially around a center axis of the silencer housing component and an end wall extending from the outer wall towards the center axis. The end wall comprises a gas directing surface that is curved to direct the gas towards a plurality of gas outlet passages formed in the outer wall.

Various effects are attained by the method of exhausting gas. The gas directing surface is non-planar and curved in such a manner that it is configured to direct gas entering the silencer housing component in a central region around the center axis towards the outer wall in which the gas outlet passages are provided. Thereby, efficient noise reduction is attainable.

Optional features of the method of exhausting gas and the effects attained thereby correspond to the optional features discussed in association with the silencer housing component, the silencer, the pneumatic component, the pneumatic system for a vehicle, and/or the commercial vehicle.

The method may be performed by or using the silencer housing component, the silencer, the pneumatic component, the pneumatic system for a vehicle, and/or the commercial vehicle disclosed herein.

According to another aspect of the invention, there is provided an assembly method of assembling a silencer of a pneumatic system for a vehicle. The assembly method comprises assembling the silencer housing component according to an aspect or embodiment, with a damping material disposed in a receptacle delimited by the outer wall and the end wall.

Various effects are attained by the assembly method. The assembly method provides a silencer in which a gas directing surface is non-planar and curved in such a manner that it is configured to direct gas entering the silencer housing component in a central region around the center axis towards the outer wall in which the gas outlet passages are provided. Thereby, the assembly method provides a pneumatic system for a vehicle in which efficient noise reduction is attainable.

According to another aspect of the invention, there is provided a use of the silencer housing component, the silencer, the pneumatic component for a vehicle, the pneumatic system for a vehicle, the method of exhausting gas, and/or the assembly method to establish a gas flow in which gas entering the silencer housing component in a direction along the center axis is directed, by the gas directing surface, in a radially outward direction towards the gas outlet passages.

Thereby, reduced noise levels are attained using a compact and simple silencer housing configuration.

Various effects and advantages are attained by the silencer housing component, the silencer, the pneumatic component for a vehicle, and the systems and methods disclosed herein. For illustration, the gas directing surface of the silencer housing component is configured to direct a gas flow entering the silencer housing component in a direction along the center axis in a radially outward direction towards the gas outlet passages. This provides a more organized gas flow, contributing to noise reduction.

Further embodiments and configurations are defined by the dependent claims. These and other aspects of the invention will be apparent from and further explained with reference to the embodiments described herein with reference to the accompanying drawings, in which:
Fig. 1 is a cross-sectional view of a silencer housing component according to an embodiment of the invention;
Fig. 2 is a perspective view of a silencer comprising the silencer housing component of Fig. 1;
Fig. 3 is a side view of the silencer of Fig. 2;
Fig. 4 is a cross-sectional view of the silencer of Fig. 2;
Fig. 5 is a graph illustrating geometrical characteristics of a gas directing surface of the silencer housing component of Fig. 1;
Fig. 6 is a further graph illustrating geometrical characteristics of a gas directing surface of the silencer housing component according to an embodiment;
Fig. 7 is a still further graph illustrating geometrical characteristics of a gas directing surface of the silencer housing component according to an embodiment;
Fig. 8 is a cross-sectional view of the silencer of Fig. 2 which includes a representative gas flow pattern;
Fig. 9 is a schematic representation of a component of a pneumatic system for a vehicle comprising the silencer housing component according to an embodiment;
Fig. 10 is a schematic representation of a pneumatic system for a vehicle configured as a gas supply system comprising the silencer housing component according to an embodiment;
Fig. 11 is a schematic representation of a pneumatic system for a vehicle configured as a gas supply system comprising the silencer housing component according to an embodiment;
Fig. 12 is a schematic representation of a pneumatic system for a vehicle configured as a gas supply system comprising the silencer housing component according to an embodiment;
Fig. 13 is a schematic representation of a pneumatic system for a vehicle configured as a pneumatic or electropneumatic braking system comprising the silencer housing component according to an embodiment;
Fig. 14 is a schematic representation of a pneumatic system for a vehicle configured as a levelling system comprising the silencer housing component according to an embodiment;
Fig. 15 is a schematic representation of a pneumatic system for a vehicle configured as a gas spring system comprising the silencer housing component according to an embodiment;
Fig. 16 is a schematic representation of a commercial vehicle;
Fig. 17 is a flow chart of a method of exhausting gas; and
Fig. 18 is a flow chart of an assembly method.

Embodiments of the invention will be described with reference to the drawings. In the drawings, similar or identical reference signs designate elements with similar or identical configuration and/or function.

The invention relates to silencer housing component. The silencer housing component may be a component defining a receptacle for receiving a damping material configured to reduce noise levels upon passage of a gas. The silencer housing component may be configured to be assembled with a further silencer housing component, so as to provide a silencer as a dedicated component, or may be configured to be assembled to a housing of a pneumatic component for a vehicle (such as a modulator or valve) at an exhaust port thereof.

As used herein, the term "silencer" refers to a component or assembly which is configured to mitigate noise levels as gas passes through the silencer. The silencer may be configured to reduce noise levels as gas is being exhausted. The silencer may be configured to convert at least part of a kinetic energy of a gas flow into heat (e.g., of a damping material received in the silencer housing component) to contribute to the noise reduction.

As used herein, the term "gas" encompasses a gaseous mixture, such as air, without being limited thereto.

As used herein, the term "pneumatic" component encompasses an electropneumatic component, and the term "pneumatic" system encompasses an electropneumatic system.

As used herein, the term "exhaust" refers to discharging of gas from a pneumatic component or a pneumatic system to ambient atmosphere.

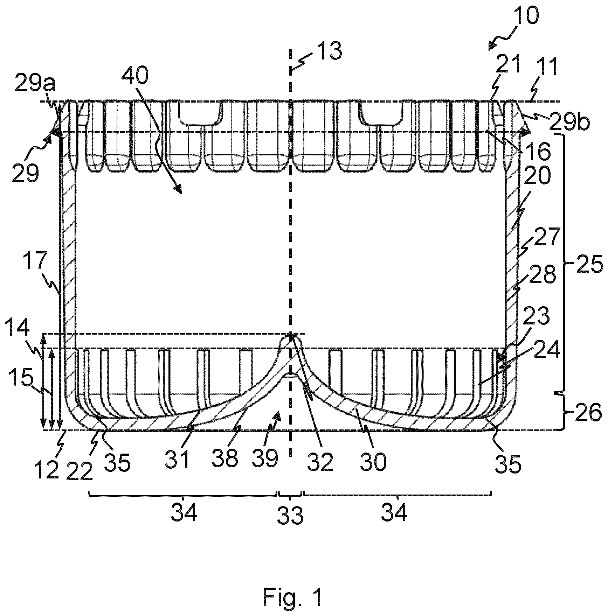

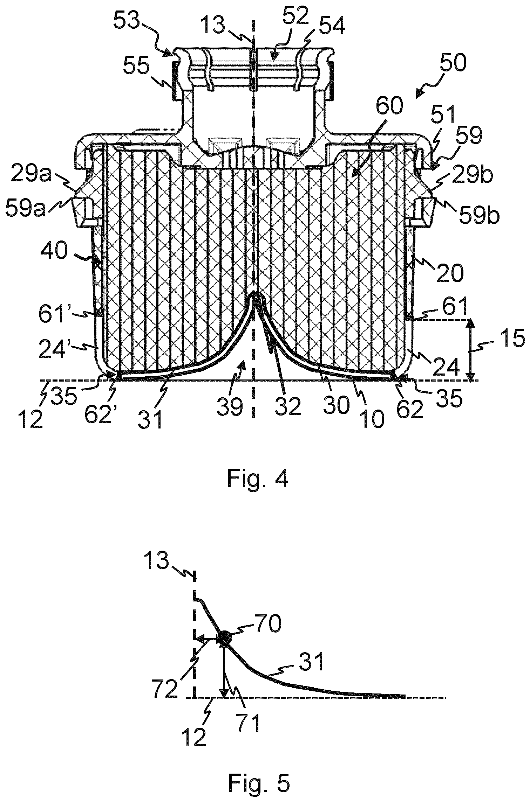

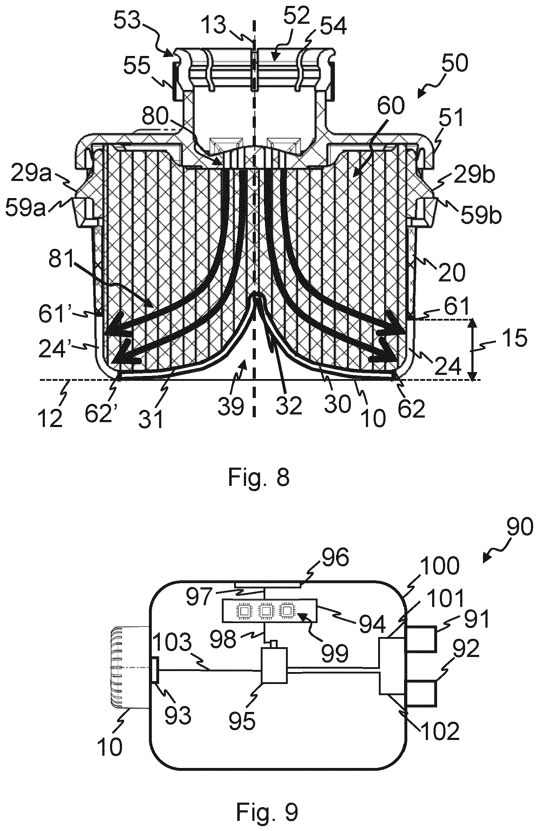

Fig. 1 is a cross-sectional view of a silencer housing component 10 according to an embodiment of the invention. The silencer housing component 10 has a center axis 13. The cross-sectional plane in which the cross-sectional view of Fig. 1 is disposed such that it extends along and includes the center axis 13. The silencer housing component 10 comprises an outer wall 20 and an end wall 30. The outer wall 20 extends circumferentially around the center axis 13. The outer wall 20 extends along the center axis from a first axial end 21 at a first plane 11 to a second axial end 22 at a second plane 12. The first axial end 21 is an axial end at which a mounting structure 29 for mounting the silencer housing component 13 is provided. The first axial end 21 is the axial end at which a gas flow enters the silencer housing component 10. The second axial end 22 is another axial end at which a plurality of gas outlet passages 23 is arranged. The second axial end 22 is the other axial end at which the gas flow leaves the silencer housing component 10. The first plane 11 may be a tangential plane to the silencer housing component 10 that is perpendicular to the center axis 13 and is tangential to the first axial end 21 at which a mounting structure 29 is provided. The second plane 12 may be another tangential plane to the silencer housing component 10 that is perpendicular to the center axis 13 and is tangential to the first axial end 21 (at which a mounting structure 29 is provided). The outer wall 20 and the end wall 30 define walls of a receptacle 40 in which a damping material can be arranged, as illustrated in Fig. 4 and Fig. 8.

The end wall 30 comprises a gas directing surface 31. The gas directing surface 31 is curved. The gas directing surface 31 is curved in such a manner that it curves in a direction towards the first plane 21 to a gas directing surface center 32. The gas directing surface center 32 is located on the center axis 13. The gas directing surface center 32 may have maximum distance from the second plane 12, from among all points on the gas directing surface 31. The gas directing surface center 32 is spaced from the second plane by an offset 14, which is measured perpendicularly to the second plane 12 (and, thus, parallel to the center axis 13). The gas directing surface 31 may generally comprise a central portion 33. In the central portion 33, a modulus of a slope of the gas directing surface 31 relative to the first plane 21 and/or the second plane 22 (with the slope being the slope as a function of radius along a radial line extending from the center axis 13 in a direction perpendicular to the center axis 13), may increase with increasing distance from the center axis 13. The gas directing surface 31 may comprise an outer portion 34. In the outer portion 34, the slope of the gas directing surface 31 relative to the first plane 21 and/or the second plane 22, may decrease with increasing distance from the center axis 13. Thus, the gas directing surface 31 may be shaped such that it has a small slope (e.g., being flat or almost flat) close to the gas directing surface center 32, then becomes more strongly inclined relative to the first plane 21 and/or the second plane 22, before flattening out towards an radially outer perimeter 35 of the gas directing surface 31. The radially outer perimeter 35 may be adjacent the outer wall 20 and/or the radially outer perimeter 35 may form an end of at least some of the plurality of gas outlet openings 23. This configuration of the gas directing surface 31 provides the effect that the gas directing surface 31 can redirect a gas flow, taking into account the change in gas flow direction from a more axial direction along the center axis 13 to a more radial direction transverse to the center axis 13 as the gas flow is directed towards the plurality of gas outlet passages 23. The radially outer perimeter 35 may be formed by a circular or elliptical line that delimits several or all of the gas outlet openings 23 in proximity to the second plane 22. The radially outer perimeter 35 may be formed by a circular or elliptical line along which the gas directing surface 31 abuts on a second outer wall portion 26 that curves inwardly towards the central axis 13.

The end wall 30 comprises the gas directing surface 31 as an inner surface (i.e., as a surface facing towards the receptacle for the damming material and/or as the surface on which the damming material abuts when the silencer housing component 10 is assembled). The end wall 30 further comprises an outer end wall surface 38 (i.e., a surface that is exposed to ambient atmosphere). When a damping material is received in the receptacle 40, the damping material may abut on the gas directing surface 31 while the outer end wall surface 38 remains spaced from the damping material. The outer end wall surface 38 may be curved so as to enter a volume that is circumferentially surrounded by the outer wall 20. The outer end wall surface 38 may be curved so as to form a concavity 39 at an outer side of the silencer housing component 10. Thereby, weight advantages are attained, which is beneficial for reducing the overall weight of the pneumatic system in which the silencer housing component 10 is installed. The outer end wall surface 38 may be curved in such a manner that the end wall 30 has a thickness that is substantially constant along at least the outer portion 34 of the gas directing surface 31. Along the central portion 33 of the gas directing surface 31, the end wall 30 may have a thickness that is equal to or greater than the thickness along the outer portion 34. Along the central portion 33 of the gas directing surface 31, the end wall 30 may have a thickness that increases towards the central axis 13.

The outer wall 20 comprises the plurality of gas outlet passages 23. Several or all of the gas outlet passages 23 may respectively be formed as or comprise radial slots through the outer wall 20. The plurality of gas outlet passages 23 may be configured such that at least one gas outlet passage 24, several gas outlet passages, or all gas outlet passages of the plurality of gas outlet passages 23 respectively extend to a second outlet passage end that is proximate the second plane 22. The plurality of gas outlet passages 23 may be configured such that at least one gas outlet passage 24, several gas outlet passages, or all gas outlet passages of the plurality of gas outlet passages 23 respectively extend to the second plane 22 (as seen in Fig. 4). The plurality of gas outlet passages 23 may be configured such that at least one gas outlet passage 24, several gas outlet passages, or all gas outlet passages of the plurality of gas outlet passages 23 respectively have a first outlet passage end that is interposed between the first plane 21 and the second plane 22. The first outlet passage end may be positioned such that it is spaced from the second plane 22 by a distance, measured parallel perpendicularly to the second plane 22 and parallel to the central axis 13, that is less than the offset 14 by which the gas directing surface center 32 is spaced from the second plane 22. The plurality of gas outlet passages 23 may be configured such that at least one gas outlet passage 24, several gas outlet passages, or all gas outlet passages of the plurality of gas outlet passages 23 have a gas outlet passage height 15, measured as distance parallel to the central axis 13 along which the gas outlet passage(s) 24 extend(s), that is less than the offset 14 by which the gas directing surface center 32 is spaced from the second plane 22. By limiting the extension of at least some, preferably all, of the plurality of gas outlet passages 23 in such a manner that the gas directing surface center 32 is located closer to the first plane 21 than the first outlet passage end that is closest to the first plane 21, effective noise reduction is attained by the gas directing surface 31 redirecting the gas flow towards the plurality of gas outlet passages 23. The plurality of gas outlet passages 23 may be configured such that at least one gas outlet passage 24, several gas outlet passages, or all gas outlet passages of the plurality of gas outlet passages 23 have the gas outlet passage height 15 which is dimensioned such that a ratio of the gas outlet passage height 15 to a housing component height 17 of the silencer housing component 10 is less than 0.3, less than 0.25, or less than 0.22. The plurality of gas outlet passages 23 may be configured such that at least one gas outlet passage 24, several gas outlet passages, or all gas outlet passages of the plurality of gas outlet passages 23 have the gas outlet passage height 15 which is dimensioned such that a ratio of the gas outlet passage height 15 to a maximum diameter 16 of the silencer housing component 10 (which is the maximum of any outer diameter measured perpendicularly to the center axis 13) is less than 0.3, less than 0.25, or less than 0.2. By limiting the extension of several, a majority of, or all of the gas outlet passages of the plurality of gas outlet passages 23 in such a manner, the gas directing surface 31 is configured to organize the gas flow in a portion of the receptacle in proximity to the gas directing surface, contributing to reduced noise levels.

The outer wall 20 of the silencer housing component may comprise at least a first outer wall portion 25 in which an outer surface 27 of the outer wall 20 and/or an inner surface 28 of the outer wall 20 has a cylindrical or frustoconical shape that extends around the center axis 13. The outer wall 20 of the silencer housing component may comprise at least a second outer wall portion 26 in which the outer surface 27 and the inner surface 28 of the outer wall 20 curve towards the central axis. The inner surface 28 may curve in the second outer wall portion 26 to provide a smooth transition between the cylindrical or frustoconical shape in the first outer wall portion 25 and the outer perimeter 35 of the gas directing surface 31.

At the first axial end 21 of the silencer housing component 10, at which the silencer housing component 10 comprises an inlet for receiving the gas flow, the mounting structure 29 is arranged. The mounting structure 29 may be configured for engagement with a mating component (e.g., with a further silencer housing component and/or a housing of another pneumatic component for a vehicle). The mounting structure 29 may be configured for a destruction-free reversibly releasable engagement with the mating component. The mounting structure 29 may be configured to secure the silencer housing component 10 at the mating component in a force-fitting and/or form-fitting manner. For illustration, the mounting structure 29 may comprise several engagement members 29a, 29b configured to engage with several mating engagement structures of the mating component.

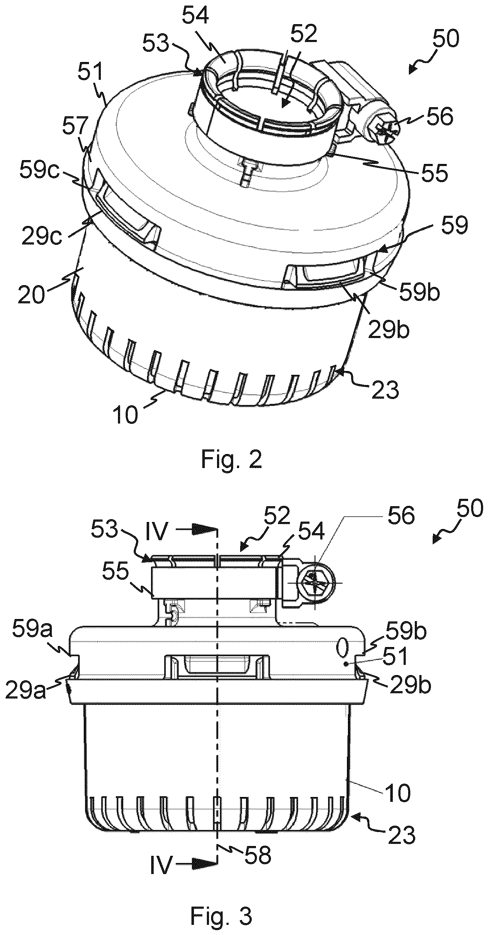

Fig. 2 is a perspective view of a silencer 50 comprising the silencer housing component 10. Fig. 3 is a plan view of the silencer 50. Fig. 4 is a cross-sectional view along a cross-sectional plane 58 indicated along line IV-IV in Fig. 3. The silencer 50 comprises a mating housing component 51. The silencer housing component 10 comprises the mounting structure 29 be configured to secure the silencer housing component to the mating housing component 51. The mating housing component 51 comprises a mating engagement structure 59 configured for a destruction-free reversibly releasable engagement with the mounting structure 29. The mating engagement structure 59 may comprise a plurality of mating engagement features 59a, 59b, 59c, such as apertures, configured for reversibly releasable engagement with the engagement members 29a, 29b, 29c of the silencer housing component 10. The mating engagement features 59a, 59b, 59c may be provided on a rim 57 of the mating housing component 51. The rim 57 may extend along at least a portion of the outer wall 20 and may overlap the portion of the outer wall 20. The silencer 50 comprises a damping material 60 arranged in the receptacle 40 so as to abut on the gas directing surface 31. The damping material 60 may be interposed between the silencer housing component 10 and the mating housing component 51, so as to be disposed in the receptacle delimited by the outer wall 20 and the end wall 30 of the silencer housing component 30.

The silencer 50 comprises a gas inlet 52. The gas inlet 52 may be provided at the mating housing component 51. The mating housing component 51 may be configured to fluidly communicate, via communication channels in the mating housing component 51, the gas inlet 52 with the receptacle 40 of the silencer housing component 10. The mating housing component 51 may comprise an attachment structure 53 configured for securing the silencer 50. The attachment structure 53 may be configured to secure the silencer 50 to an exhaust port or an exhaust line. The attachment structure 53 may comprise an attachment flange 54, a compression band 55, and a fastening mechanism 56. The attachment flange 54 may comprise several flange portions, each separated from adjacent flange portions of the attachment flange by a gap when the attachment flange 54 is in an unbiased position in which the compression band 55 does not exert a radial force onto the attachment flange 54. The fastening mechanism 56 is configured to act on the compression band 55 to radially compress the attachment flange 54 and secure the compression band and attachment flange 54 in such a compressed configuration.

In the silencer 50, the gas directing surface 31 of the end wall 30 is configured to direct a gas flow entering the receptacle 40 in a direction along the center axis and in a region proximate the center axis, with the gas flow being re-directed towards the plurality of gas outlet passages 24.

Fig. 4 also illustrated in greater detail a configuration of a gas outlet passage 24 and a further gas outlet passage 24' of the plurality of gas outlet passages 23. The gas outlet passage 24 extends from, and is delimited by, the first outlet passage end 61 and the second outlet passage end 62, with the second outlet passage end 62 being closer to the second plane 22 than the first outlet passage end 61. Each of one or several other gas outlet passages 24' of the plurality of gas outlet passages 23 extends from, and is delimited by, another first outlet passage end 61' and another second outlet passage end 62', with the other second outlet passage end 62' being closer to the second plane 22 than the other first outlet passage end 61'. The second outlet passage end 62 and the other second outlet passage end(s) 62' may share an edge with the outer end wall surface 38 that is located at the second plane 12. The second outlet passage end 62 and the other second outlet passage end(s) 62' may share another edge with the gas directing surface 31, with the other edge being located at the outer perimeter 35 of the gas directing surface 31. At the second outlet passage end(s) 62, 62', the end wall 30 may have an end wall thickness equal to a thickness of the outer wall 20 at the second outlet passage end(s) 62, 62'.

Additional geometrical features of the gas directing surface 31 will be explained in more detail next, which contribute to efficiently re-directing the gas flow towards the plurality of gas outlet passages 23 and to noise level reduction. The gas directing surface 31 may be symmetric relative to at least one, preferably relative to several and/or all planes that contain the center axis 13. For illustration, as seen in Fig. 4, the gas directing surface 31 may be mirror-symmetric relative to the plane 58 that contains the center axis 13. The gas directing surface 31 may be rotationally symmetric around the center axis 13, e.g., for a discrete set of rotation angles around the center axis 13 and/or for any rotation angle around the center axis 13.

For at least one (and optionally every) plane 58 that contains the center axis 13, an intersection of the gas directing surface 31 with the respective plane 58 is defined by a function that specifies a position of any point on the gas directing surface 31, e.g., by specifying a distance from the second plane 12 (measured perpendicularly to the second plane 12) in dependence on distance from the center axis 13 (measured perpendicularly to the center axis 13). Such a function defines the geometry of the gas directing surface 31. Fig. 5 illustrates this dependency. For any point 70 on the gas directing surface 31, a position of the point 70 can be defined by a spacing 71 from the second plane 12 as a function of distance 72 from the center axis 13.

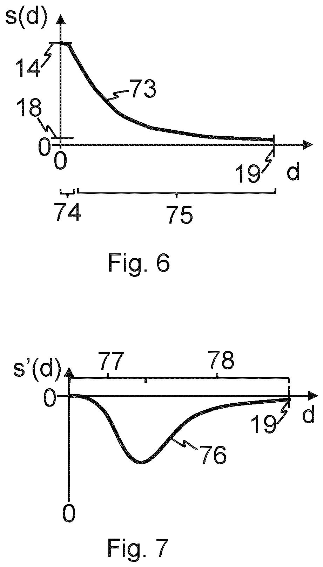

Fig. 6 shows a function 73 that defines the spacing (illustrated as spacing 71 in Fig. 5) from the second plane 12 in dependence on the distance (illustrated as distance 72 in Fig. 5) from the center axis 13. The distance from the center axis 13 is a radial position relative to the center axis 13. The gas directing surface 31 may be configured such that, in at least a first radial range 74 adjacent the center axis 13, the function 73 decreases from the offset 14 and has a derivative of zero at the center axis 13, i.e., at the gas directing surface center 32. The gas directing surface 31 may be configured such that, in a second radial range 75 radially outward of the first radial range 74, the function 73 decreases and ultimately flattens out towards the thickness 18 of the end wall at the outer perimeter of the end wall 30. Thus, a slope of the gas directing surface 31 may vary in a non-monotonous manner in the second radial range 75.

Fig. 7 illustrates a derivative 76 of the function 73. A modulus of the derivative 76 corresponds to the slope of the gas directing surface 31 as a function of radial distance from the center axis 13. The gas directing surface 31 may be configured such that, in a further first radial range 77 (which may encompass the first radial range 74), the derivative 76 decreases monotonously, indicating that the gas directing surface 31 has a slope that gets steeper with increasing distance from the center axis 13 in the further first radial range 77. The gas directing surface 31 may be configured such that, in a further second radial range 78 (which may be encompassed by the second radial range 75), the derivative 76 increases monotonously, indicating that the gas directing surface 31 has a slope that gets less steep with increasing distance from the center axis 13 in the further first radial range 77. Thus, the gas directing surface 31 may be configured such that it is steepest, as a function of radial distance from the center axis 13, at a radial distance intermediate between the center axis 13 and the outer perimeter 35, while flattening out both towards the center axis 13 and towards the outer perimeter 35.

Fig. 8 shows the cross-sectional view of Fig. 4, illustrating a gas flow 81 during operation of the silencer 50. The silencer housing component 10 is configured to receive the gas flow 81 through one or several inlet passages 80. The one or several inlet passages 80 may respectively extend parallel to or along the center axis 13. The gas directing surface 31 is configured to redirect the gas flow so as to efficiently change a gas flow direction such that it becomes directed more towards the plurality of gas outlet passages 23 (of which the gas outlet passage 24 and the diametrically opposed other gas outlet passage 24' are visible in Fig. 8).

The silencer housing component 10 may be used as part of the silencer 50 but is not limited thereto. The silencer housing component 10 may be configured to be used in association with and integrated into another pneumatic system component, as schematically illustrated in Fig. 9.

Fig. 9 shows a pneumatic system component 90. The pneumatic system component 90 is configured for use in a pneumatic system of a vehicle. The pneumatic system component 90 comprises a component housing 100, at least one valve 95 arranged in the housing 100, and a plurality of ports provided on the housing 100 in direct or indirect fluid communication with a valve 95 of the pneumatic system component 90. The plurality of ports comprise at least an exhaust port 93. The silencer housing component 10 is configured for attachment (e.g., an attachment that can be released in a reversible, destruction-free manner) with the component housing 100 at the exhaust port 93, to provide a reduction of noise levels during an exhaust operation. The plurality of ports may comprise a supply port 91 configured to receive pressure gas provided by a gas supply system and/or a discharge port 92 configured for fluid communication (e.g., for bi-directional fluid communication) with at least one pneumatic consumer. The pneumatic system component 90 may comprise a first fluid connection 101 that establishes (direct or indirect) fluid communication of the supply port 91 and a first port of the valve 95. The first fluid connection 101 may be directly connected to the supply port 91 and the first port of the valve 95. The pneumatic system component 90 may comprise a second fluid connection 102 that establishes (direct or indirect) fluid communication of the discharge port 92 and a second port of the valve 95. The second fluid connection 102 may be directly connected to the discharge port 92 and the first port of the valve 95. The pneumatic system component 90 may comprise a third fluid connection 103 that establishes (direct or indirect) fluid communication of the exhaust port 93 and a third port of the valve 95. The third fluid connection 103 may be directly connected to the exhaust port 93 and the third port of the valve 95. The first fluid connection 101, the second fluid connection 102, and the third fluid connection 103 may be integrated within the component housing 100.

The pneumatic system component 90 may be configured as a component for an electropneumatic system. The at least one valve 95 may comprise a solenoid valve or several solenoid valves. The pneumatic system component 90 may comprise an electric interface 96. The electric interface 96 may be configured for being connected to a control unit, a vehicle bus, or at least one actuation element that can be operated by a vehicle operator. The pneumatic system component 90 may comprise an electronics portion 94 that may be accommodated within the component housing 100 or a dedicated electronics housing attached to the component housing 100. The electronics portion 94 may be configured to selectively energize at least one solenoid valve, responsive to a signal or control data received at the electric interface 96. The electronics portion 94 may comprise one or several circuit(s) 99. The one or several circuit(s) may comprise any one, several, or any combination of: integrated circuits, integrated semiconductor circuits, processors, controllers, application specific integrated circuits (ASICs), field programmable gate arrays (FPGAs), without being limited thereto. The electronics portion 94 may be communicatively coupled with the electric interface 96 via at least one electric connection 97. The electronics portion 94 may be coupled with the solenoid valve(s) 95 via at least one further electric connection 98.

In the pneumatic system component 90, the silencer housing component 10 is configured such that it provides improvements with respect to gas flow and noise level reduction, as previously explained.

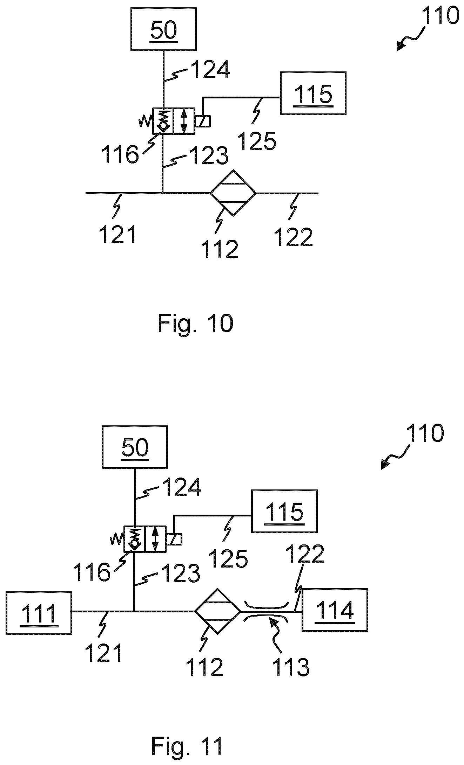

Fig. 10 shows a schematic representation of a pneumatic system 110 for a vehicle. The pneumatic system 110 is configured as a gas supply system. The pneumatic system 110 comprises an air dryer 112. The pneumatic system 110 comprises a supply line 121 directly connected to the air dryer 112 to provide compressed gas to the air dryer 112 and/or transport gas towards at least one exhaust line 123, 124 in an air dryer regeneration operation and/or other exhaust operation. The pneumatic system 110 comprises a pneumatic consumer line 122 directly connected to the air dryer 112 and configured to provide compressed gas to a pneumatic consumer system comprising at least one pneumatic consumer. The pneumatic consumer line 122 may be configured to provide gas from the pneumatic consumer system to the air dryer 112, e.g., to perform a regeneration operation. The pneumatic system 110 comprises the at least one exhaust line 123, 124 configured to exhaust gas, via a silencer 50, to ambient atmosphere. The silencer 50 comprises the silencer housing component 10 according to an embodiment, as disclosed herein. The at least one exhaust line 123, 124 comprises an exhaust line 123 that is directly connected to the supply line 121 and to a control valve 116. The at least one exhaust line 123, 124 comprises a further exhaust line 124 directly connected to the control valve 116 and the gas inlet 52 of the silencer 50. The gas supply system 110 comprises control electronics 115, such as a control device, coupled to the control valve 116 by an electric connection 125. The control electronics 115 is configured to control the control valve 116 to selectively establish fluid communication between the supply line 121 and the silencer 50 and/or to selectively disconnect the silencer 50 from the supply line 121.

Fig. 11 shows a schematic representation of a pneumatic system 110 for a vehicle. The pneumatic system 110 is configured as a gas supply system. Components already discussed in association with Fig. 10 are designated with the same reference signs as in Fig. 10. The pneumatic system 110 further comprises a pressure gas source 111. The pressure gas source 111 may comprise a compressor and/or a pressure reservoir. The pressure gas source 111 may be comprise an intake for ambient air and may be configured to compress the ambient air to provide pressure gas. The pressure gas source 111 may be connected directly or via at least one valve to the supply line 121. The pneumatic system 110 further comprises a pneumatic consumer system 114. The pneumatic consumer system 114 comprises at least one pneumatic consumer coupled, directly or via at least one fluid circuit component, to the pneumatic consumer line 122. The pneumatic consumer line 122 comprises at least one regeneration valve 113 configured to be activated to selectively perform a regeneration of a desiccant of the air dryer 112. When performing the regeneration, the gas passing from the pneumatic consumer system 114 through the gas dryer 112 may be exhausted via the silencer 50 connected to the at least one exhaust line 123, 124.

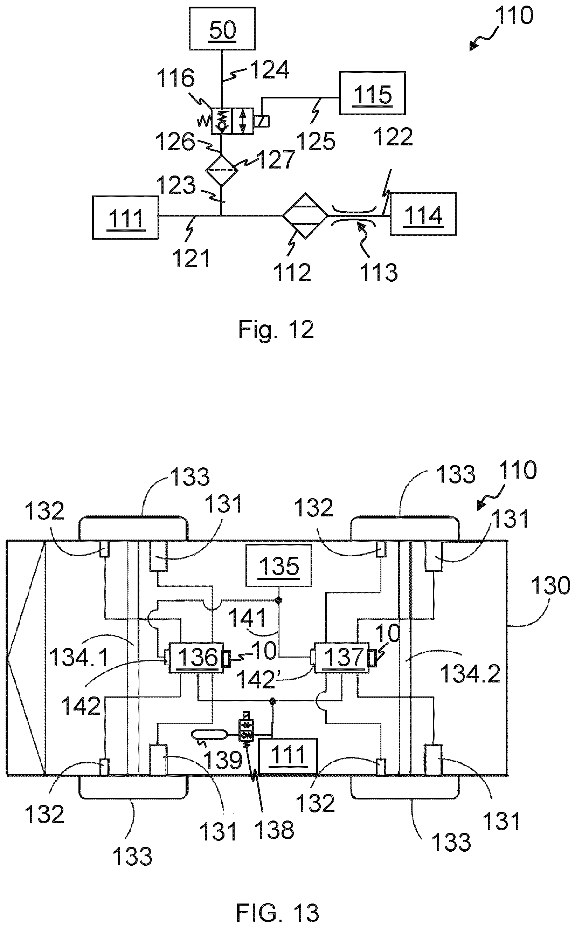

Fig. 12 shows a schematic representation of a pneumatic system 110 for a vehicle. The pneumatic system 110 is configured as a gas supply system. Components already discussed in association with Fig. 10 and/or Fig. 11 are designated with the same reference signs as in Fig. 10 and/or Fig. 11. The pneumatic system 110 further comprises at least one filter 127. The exhaust line 123 is directly connected to a port of the filter 127. The pneumatic system 110 further comprises a filter connection line 126 directly connected to another port of the filter 127 and the control valve 116.

Fig. 11 shows a schematic representation of a vehicle 130 comprising a pneumatic system 110. The pneumatic vehicle system 110 may be configured as a braking system, e.g. as an EBS system. The pneumatic vehicle system 110 configured as a braking system comprises at least one pneumatic system component, such as a front axle modulator 136 and/or a rear axle modulator 137, which comprises the silencer housing component 10. The vehicle 130 comprises a front axle 134.1 and a rear axle 134.2 or several rear axles. The vehicle 130 comprises several wheel 133. The vehicle 130 comprises one or several sensors, such as wheel speed sensors 132 associated with the several wheels 133. The pneumatic system 110 comprises several brake cylinders 131. The pneumatic system 110 comprises control electronics 135, such as a control unit 135, which is coupled to the front axle modulator 136 and the rear axle modulator 137 via at least one electric connection 141. The front axle modulator 136 comprises an electric interface 142 for communicatively interfacing with the control electronics 135. The rear axle modulator 137 comprises a further electric interface 142' for communicatively interfacing with the control electronics 135. The front axle modulator 136 has at least one discharge port in fluid communication with brake cylinders 131 for front axle wheels. The rear axle modulator 137 has at least one further discharge port in fluid communication with brake cylinders 131 for rear axle wheels. The pneumatic system 110 may comprise the fluid supply system of any one of Fig. 10, Fig. 11, and Fig. 12 to provide pressure gas to the modulators 136, 137. The pneumatic system 110 may comprise a supply system that comprises at least the compressor 111 and a pressure reservoir 138, with the pressure reservoir being connected to a supply line for the modulators and an outlet port of the compressor 111 via a control valve 138.

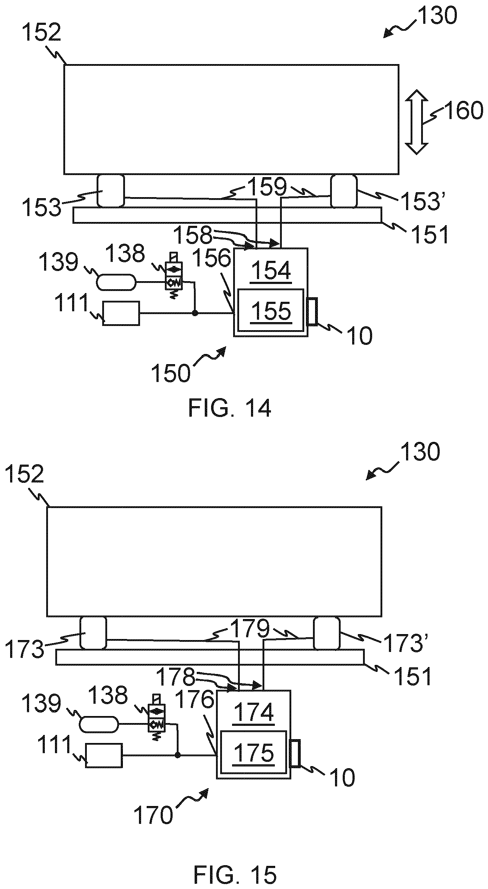

Fig. 14 is a schematic representation of a vehicle 130 which comprises a pneumatic vehicle system 150 configured as an electro-pneumatic cabin leveling system. The electro-pneumatic cabin leveling system 150 is configured to change an inclination of a cabin 152 of the vehicle 130 relative to a chassis 151. The pneumatic system 150 comprises at least a pneumatic adjustment element 153 and a further pneumatic adjustment element 153', each of which is configured to change the inclination of the cabin 152. The pneumatic adjustment element 153 and the further pneumatic adjustment element 153' can be configured as inflatable gas bags. The pneumatic system 150 comprises an electropneumatic control device 154. The electropneumatic control device 154 comprises at least two solenoid valves 155 (with the system of at least two solenoid valves being indicated merely schematically in Fig. 14). The electropneumatic control device 154 is arranged to selectively energize the at least two solenoid valves 155 such that compressed air received at a compressed gas inlet 156 is supplied to one or both of the pneumatic adjusting element 153 and the further pneumatic adjusting element 153'. The electropneumatic control device 154 is arranged to selectively energize the at least two solenoid valves 155 such that one or both of the pneumatic adjusting element 153 and the further pneumatic adjusting element 153' is vented via exhaust port of the electropneumatic control device 154. The silencer housing component 10 is arranged at the exhaust port of the electropneumatic control device 154. The electropneumatic control device 154 comprises consumer ports 158, each of which is connected to one of the pneumatic adjusting elements 153, 153' via a connecting line 159. The configuration of the pneumatic system 150 allows different parts of the cabin 152 to be adjusted along an adjustment path 160 in order to adjust the inclination and/or height so that the cabin 152 has a desired attitude relative to a gravity direction. For illustration, the pneumatic system 150 may be configured to allow the cabin 152 to be oriented with its floor perpendicular to a direction of gravity when the chassis 151 is inclined. The solenoid valves 155 can be actuated in a conventional manner, responsive to a mechanical linkage, signals or data received by the electropneumatic control device 154. The pneumatic system 150 may comprise a gas supply system as explained with reference to Fig. 10, Fig. 11, and Fig. 12. The pneumatic system 150 comprises at least a compressor 111 and a gas reservoir 139, with the gas reservoir 139 being connected to the electropneumatic control device 154 via at least one control valve 138.

Fig. 15 is a schematic representation of a vehicle 130 having a pneumatic system 170 configured as an electro-pneumatic shock absorber system. The pneumatic system 170 comprises at least a pneumatic shock absorber 173 and a further pneumatic shock absorber 173', which are each arranged between a chassis 151 and a cab 152. The pneumatic shock absorber 173 and the further pneumatic shock absorber 173' can be configured as gas bags whose pressure is adjustable. The pneumatic system 170 comprises an electropneumatic control device 174. The electropneumatic control device 174 comprises at least one solenoid valve or several solenoid valves 175 (which are shown merely schematically as a block in Fig. 15). The electropneumatic control device 174 is configured to selectively energize the at least one solenoid valve or the several solenoid valves 175 such that compressed gas received at a gas supply port is discharged to the pneumatic shock absorber 173 and the further pneumatic shock absorber 173' and/or that the pneumatic shock absorber 173 and the further pneumatic shock absorber 173' can be vented via an exhaust port of the electropneumatic control device 174. The silencer housing component 10 is arranged at the exhaust port. The electropneumatic control device 174 comprises at least one consumer port 178, which is connected to the pneumatic shock absorber 173 and the further pneumatic shock absorber 173' via at least one connecting line 179. This configuration allows the pressure in the shock absorbers 173, 173' to be controlled using open-loop control and/or closed-loop control. The pneumatic system 170 may comprise a gas supply system as explained with reference to Fig. 10, Fig. 11, and Fig. 12. The pneumatic system 170 comprises at least a compressor 111 and a gas reservoir 139, with the gas reservoir 139 being connected to the electropneumatic control device 154 via at least one control valve 138. The solenoid valves 175 can be actuated in a conventional manner, responsive to a mechanical linkage, signals or data received by the electropneumatic control device 174.

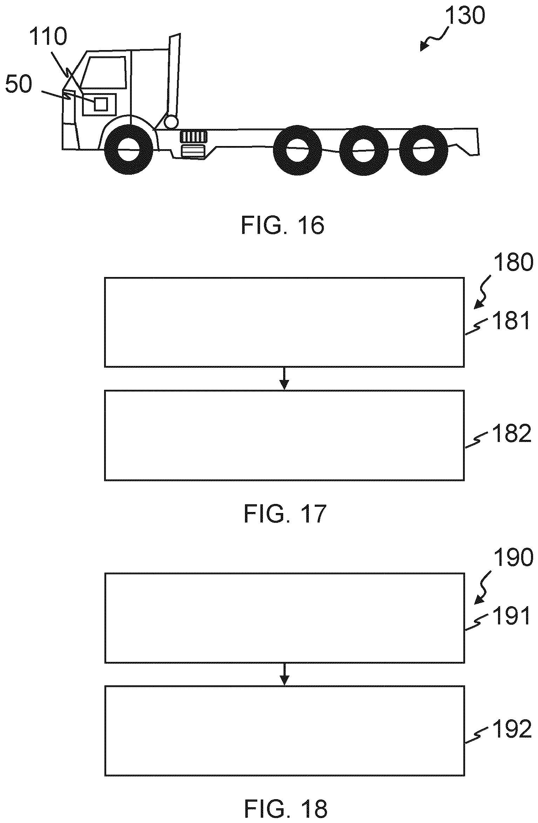

Fig. 16 shows a schematic representation of a vehicle 130 configured as a commercial vehicle. The commercial vehicle comprises at least one pneumatic system 110 comprising the silencer 50 and/or the silencer housing component 10. The pneumatic system 110 may comprise any one or any combination of a supply system for supplying compressed air; a levelling system; a suspension system; a braking system.

Fig. 17 is a flow chart of a method 180 of exhausting gas from a pneumatic system 110, 150, 170 for a vehicle 130. The method 180 may be performed automatically by or using the pneumatic system 110, 130, 150, 170 comprising at least one silencer housing component 10 according to an embodiment.

The method 180 comprises a process block 181 of establishing, via at least one valve, fluid communication between at least one component of the pneumatic system and an exhaust port. The exhaust port is a port at which the silencer housing component 10 is provided or with which the silencer 50 comprising the silencer housing component 10 is connected.

The method 180 may further comprise a process block 182 of directing, by the silencer housing component 10, the gas flow through the plurality of gas outlet passages 29. Directing the gas flow may comprise changing, by the gas directing surface 31, a gas flow direction from a first gas flow direction generally along the center axis 13 to a second gas flow direction generally transverse to the center axis 13.

Fig. 18 is a flow chart of an assembly method 190 of assembling a silencer 50 of a pneumatic system 110, 150, 170 for a vehicle 130. The assembly method 190 may be performed automatically by or using an assembly system.

The assembly method 190 comprises a process block 191 of disposing a damping material 60 in a receptacle 40 delimited by the outer wall 20 and the end wall 30 of the silencer housing component 10.

The method comprises a process block 192 of assembling the silencer housing component 10 with a mating component. The mating component may comprise or may be the mating housing component 51 of the silencer 50 and/or the housing component 100 of the pneumatic component 90.

The method 190 may further comprise assembling the silencer 50 or pneumatic component 90 in a pneumatic system 110, 150, 170, comprising establishing a direct or indirect pneumatic connection between the silencer 50 or the pneumatic component 90 and at least one of a pressure source 111 and/or a pneumatic consumer system 114.

While embodiments have been described with reference to the drawings, modifications and alterations may be implemented in other embodiments.

For illustration, while embodiments have been described in which all gas outlet passages of the plurality of gas outlet passages 23 extend over a same height 14, at least some of the gas outlet passages 23 may have a different shape and/or size. For further illustration, while a configuration has been described in which an end wall outer surface 38 is also curved to define an outer cavity 39, the end wall outer surface 38 may be substantially planar. For further illustration, while a configuration has been described in which the gas directing surface 31 is rotationally symmetric, the gas directing surface 31 need not be rotationally symmetric.

For further illustration, the invention may be applied to a variety of pneumatic vehicle systems, including gas supply systems configured to perform an air dryer regeneration, without being limited thereto.

Various effects and advantages are attained by embodiments of the invention. Embodiments provide improved gas flow and noise reduction characteristics. This facilitates compliance with regulatory noise pollution requirements, enhances vehicle operator safety and/or comfort, and improves passenger comfort.

### List of Reference Numerals (part of the description)

- 10: silencer housing component
- 11: first plane
- 12: second plane
- 13: center axis
- 14: offset
- 15: outlet passage height
- 16: maximum diameter
- 17: housing component height
- 18: end wall thickness at end wall outer perimeter
- 19: end wall radius
- 20: outer wall
- 21: first axial end
- 22: second axial end
- 23: plurality of gas outlet passages
- 24: gas outlet passage
- 24': further gas outlet passage
- 25: first outer wall portion
- 26: second outer wall portion
- 27: outer surface of outer wall
- 28: inner surface of outer wall
- 29: mounting structure
- 29a, 29b, 29c: engagement member
- 30: end wall
- 31: gas directing surface
- 32: gas directing surface center
- 33: central portion of gas directing surface
- 34: outer portion of gas directing surface
- 35: radially outer perimeter of end wall
- 38: outer surface of end wall
- 39: concavity
- 40: receptacle
- 50: silencer
- 51: mating housing component
- 52: gas inlet
- 53: attachment structure
- 54: attachment flange
- 55: compression band
- 56: fastening mechanism
- 57: rim
- 58: cross-section plane
- 59: mating engagement structure
- 59a, 59b, 59c: mating engagement member
- 60: damping material
- 61: first outlet passage end
- 61': further first outlet passage end
- 62: second outlet passage end
- 62': further second outlet passage end
- 70: point on gas directing surface
- 71: spacing from second plane
- 72: distance from center axis
- 73: function
- 74: first radial range
- 75: second radial range
- 76: derivative of function
- 77: further first radial range
- 78: further second radial range
- 80: inlet passages
- 81: gas flow
- 90: pneumatic system component
- 91: supply port
- 92: discharge port
- 93: exhaust port
- 94: electronics portion
- 95: solenoid valve
- 96: electric interface
- 97: electric connection
- 98: further electric connection
- 99: circuit(s)
- 101: first fluid connection
- 102: second fluid connection
- 103: third fluid connection
- 110: pneumatic system for a vehicle
- 111: pressure gas source
- 112: air dryer
- 113: regeneration valve
- 114: pneumatic consumer system
- 115: control electronics
- 116: control valve
- 121: supply line
- 122: pneumatic consumer line
- 123: exhaust line
- 124: further exhaust line
- 125: electric connection
- 126: filter connection line
- 127: filter
- 130: vehicle
- 131: brake cylinder
- 132: wheel speed sensor
- 133: wheel
- 134.1: front axle
- 134.2: rear axle
- 135: control electronics
- 136: front axle modulator
- 137: rear axle modulator
- 138: control valve
- 139: pressure reservoir
- 141: electric line
- 142: electric interface
- 150: electropneumatic levelling system
- 151: chassis
- 152: cabin
- 153: adjustment member
- 153': further adjustment member
- 154: electropneumatic control device
- 155: solenoid valve(s)
- 156: supply port
- 158: discharge port(s)
- 159: pneumatic consumer lines
- 160: levelling adjustment path
- 170: electropneumatic shock absorbing system
- 173: pneumatic shock absorber
- 173': further pneumatic shock absorber
- 174: electropneumatic control device
- 175: solenoid valve(s)
- 176: supply port
- 178: discharge port(s)
- 179: pneumatic consumer lines
- 180: method
- 181, 182: process blocks
- 190: method
- 191, 192: process blocks

## Claims

1. A silencer housing component (10) for a pneumatic system (110; 150; 170) for a vehicle (130), silencer housing component (10) comprising:
an outer wall (20) extending circumferentially around a center axis (13) of the silencer housing component (10), the outer wall (20) comprising a first axial end (21) extending along a first plane (11) and a second axial end (22) extending along a second plane (12), the first plane (11) and the second plane (12) extending transverse to the center axis (13), wherein a mounting structure (29, 29a, 29b, 29c) for mounting the silencer housing component (10) is arranged at the first axial end (21) of the outer wall (20), and wherein a plurality (23) of gas outlet passages (24, 24') are formed through the outer wall (20); and
an end wall (30) extending from the outer wall (20) towards the center axis (13), the end wall (30) comprising a gas directing surface (31) that curves towards the first plane (11) as it extends from the second axial end (22) of the outer wall (20) towards the center axis (13).

2. The silencer housing component (10) of claim 1,
wherein the gas directing surface (31) comprises a gas directing surface center (32) on the center axis (13), the gas directing surface center (32) having an offset (14) from the second plane (12) towards the first plane (11).

3. The silencer housing component (10) of claim 2, wherein the offset (14) is greater than a wall thickness (18) of the outer wall (20) at the second axial end (22)

4. The silencer housing component (10) of any one of the preceding claims, wherein a spacing (71) between the gas directing surface (31) and the second plane (12), measured parallel to the center axis (13), decreases monotonously as function of a radial distance (72) from the center axis (13).

5. The silencer housing component (10) of claim 4, wherein the spacing (71) decreases strictly monotonously as function of the radial distance (72) for at least a portion of the gas directing surface (31).

6. The silencer housing component (10) of claim 5,
wherein the spacing (71) as function of the radial distance (72) has a first derivative (76) that is a non-monotonous function of the radial distance (72).

7. The silencer housing component (10) of claim 6, wherein a modulus of the first derivative (76) decreases in at least an outer portion (78) of the gas directing surface (31).

8. The silencer housing component (10) of claim 2 or any one of claims 3 to 7 when dependent on claim 2, wherein the plurality (23) of gas outlet passages (24, 24') comprises at least one gas outlet passage extending from a first outlet passage end (61, 61') to a second outlet passage end (62, 62'), the second outlet passage end (62, 62') being located closer to the second plane (12) than the first outlet passage end (61, 61'), the first outlet passage end (61, 61') being spaced from the second plane (12) by an outlet passage height (15) that is less than the offset (14) by which the gas directing surface center (32) is spaced from the second plane (12).

9. The silencer housing component (10) of claim 8, wherein the plurality (23) of gas outlet passages (24, 24') comprise several gas outlet passages (24, 24'), each of which
has a first outlet passage end (61, 61') spaced from the second plane (12) by a spacing (15) that is less than the offset (14) of the gas directing surface center (32) from the second plane (12) and
extends to the second plane (12).

10. The silencer housing component (10) of any one of the preceding claims, wherein the plurality (23) of gas outlet passages (24, 24') extend to a gas outlet passages height (15) relative to the second plane (12), wherein one, several, or all of the following apply:
the gas outlet passage height (15) is less than 15 mm, less than 13 mm, less than 11 mm, or less than 10 mm;
the gas outlet passage height (15) divided by a height (17) of the silencer housing component (10), measured parallel to the center axis (13), is less than 0.3, less than 0.25, or less than 0.22;
the gas outlet passage height (15) divided by a maximum diameter (16) of the silencer housing component (10), measured perpendicular to the center axis (13), is less than 0.3, less than 0.25, or less than 0.2.

11. The silencer housing component (10) of any one of the preceding claims, wherein the gas directing surface (31) is
symmetric relative to at least one symmetry plane (58) that comprises the center axis (13), and/or
rotationally symmetric relative to the center axis (13).

12. A silencer (50) for a pneumatic system for a vehicle, comprising:
the silencer housing component (10) of any one of the preceding claims;
a mating housing component (51) comprising a mating engagement structure (59, 59a, 59b, 59c) for engagement with the mounting structure (29, 29a, 29b, 29c); and
a noise damping material (60) configured to be disposed in a receptacle (40) delimited by the outer wall (20) and the end wall (30) of the silencer housing component (10).

13. A pneumatic system (110; 150; 170) for a vehicle (130), comprising the silencer housing component (10) of any one of claims 1 to 11 or the silencer (50) of claim 12.

14. A commercial vehicle (130), comprising the silencer housing component (10) of any one of claims 1 to 11, the silencer (50) of claim 12, or the pneumatic system (110; 150; 170) of claim 13.

15. A method of exhausting gas from a pneumatic system (110; 150; 170) for a vehicle (130), the method comprising:
exhausting the gas through a silencer (50) of the pneumatic system (110; 150; 170), the silencer (50) comprising a silencer housing component (10) comprising an outer wall (20) extending circumferentially around a center axis (13) of the silencer housing component (10) and an end wall (30) extending from the outer wall (20) towards the center axis (13), wherein the end wall (30) comprises a gas directing surface (31) that is curved to direct the gas towards a plurality (23) of gas outlet passages (24, 24') formed in the outer wall (20).
